Europäisches Patentamt

European Patent Office

Office européen des brevets

(19)

(11) **EP 0 723 483 B1**

(12) ## EUROPÄISCHE PATENTSCHRIFT

(45) Veröffentlichungstag und Bekanntmachung des Hinweises auf die Patenterteilung:
**05.08.1998 Patentblatt 1998/32**

(21) Anmeldenummer: **94930919.9**

(22) Anmeldetag: **13.10.1994**

(51) Int. Cl.⁶: **B07C 3/02**, B65G 1/137,
D06F 93/00

(86) Internationale Anmeldenummer:
**PCT/DE94/01244**

(87) Internationale Veröffentlichungsnummer:
**WO 95/10368 (20.04.1995 Gazette 1995/17)**

(54) **VERFAHREN ZUM SORTIEREN VON EINZELSTÜCKEN UND SORTIERANLAGE**

PROCESS AND INSTALLATION FOR SORTING INDIVIDUAL GOODS

PROCEDE ET INSTALLATION DE TRIAGE DE PIECES INDIVIDUELLES

(84) Benannte Vertragsstaaten:
**AT CH FR GB IT LI NL SE**

(30) Priorität: **13.10.1993 DE 4335637**

(43) Veröffentlichungstag der Anmeldung:
**31.07.1996 Patentblatt 1996/31**

(73) Patentinhaber: **Lux, Dietrich**
**D-13465 Berlin (DE)**

(72) Erfinder: **Lux, Dietrich**
**D-13465 Berlin (DE)**

(74) Vertreter: **Walter, Wolf-Jürgen**
**Patentanwälte Felke & Walter**
**Normannenstrasse 1-2**
**10367 Berlin (DE)**

(56) Entgegenhaltungen:
DE-A- 2 110 390      DE-A- 2 852 190
GB-A- 2 079 708      GB-A- 2 113 633
US-A- 4 244 672

**Beschreibung**

Die Erfindung betrifft ein Verfahren zum Sortieren von Stückgütern beliebiger Art, wie beispielsweise Kleidungsstücke, Kleinteile, Paletten, Postgut, Arzneimittelpackungen usw. sowie eine Sortieranlage zum Sortieren dieser Stückgüter.

Aus dem Stand der Technik sind Sortieranlagen für Gegenstände bekannt, bei denen unterschiedliche Einzelstücke am Ende des Sortiervorganges bestimmten Empfängergruppe als geordnete Zusammenstellung der Einzelstücke zugeführt werden sollen. Beispielsweise sollen für verschiedene Kunden gewaschene Kleidungsstücke nach dem gemeinsamen Waschvorgang dem einzelnen Firmen wieder in geordnetem Zustand übergeben werden; oder es sollen verschiedenen Apotheken aus dem Großhandelslager mit Arzneimitteln in der gewünschten Zusammenstellung nach Patienten geordnet und in der Reihenfolge, wie die Belieferung der Apotheken erfolgt, beliefert werden. Bei den bekannten Sortierverfahren besteht der entscheidende Nachteil darin, daß die von der Sortieranlage erbrachte Durchsatzleistung sehr schwankt und insgesamt deutlich geringer ist als die Förderleistung der zur Sortieranlage verknüpften Fördereinrichtungen, weil die zu sortierenden "Posten" und die daraus zusammengestellten "Chargen" unterschiedlich groß sein können und dadurch erhebliche Wartezeiten in den Posten-Sammeleinrichtungen der Sortieranlage entstehen, da die Sortierung im wesentlichen durch hintereinandergeschaltete Verteilprozesse erfolgt.

Da die Erfindung vor allem anhand eines Beispiels einer Mietberufskleidungs-Wäscherei erläutert werden soll, soll auch der bekannte Ablauf in diesem Bereich herangezogen werden. Der Ablauf in einer solchen Sortieranlage erfolgt in der Weise, daß arbeitstäglich eine Vielzahl von in Schutzsäcken gesammelter verschmutzter Kleidungsstücke mehrerer Kunden der Wäscherei zugeführt werden und nach erfolgtem Waschen den einzelnen Kunden einige Zeit später in der vom Kunden verlangten Reihenfolge z.B. nach Träger, Zusammengehörigkeit der Kleidungsstücke (Jacke/Hose), Schrank-Nr., Ablagefach usw. übergeben bzw. eingeordnet werden. Dazu sind in einer typischen dafür spezialisierten Wäscherei mit einem Durchsatz von ca. 18.000 Kleidungsstücken pro Schicht die folgenden Arbeitsschritte erforderlich:

1) In der Wäscherei werden die Kleidungsstücke den Schutzsäcken entnommen. Die in jedem Kleidungsstück unverlierbar befestigte individuelle Identifikations-Nr. wird gelesen und im Bestandsverwaltungs-Rechner gespeichert. Es werden jeweils erst alle Kleidungsstücke eines Kunden gelesen, bevor Kleidungsstücke des nächstfolgenden Kunden registriert werden.

2) Die Kleidungsstücke werden nach der Registrierung nach Gewebearten, Einfärbung, Verschmutzungsarten und -intensitäten sortiert und getrennt in Fördercontainern gesammelt. Das Ladevolumen eines Fördercontainers entspricht einer "Wasch-Charge" der mehreren gleichartigen, parallel arbeitenden Waschmaschinen.

3) Wasch-Chargen mit demselben Sortierkriterium werden hintereinander mit dem eingestellten Maschinentakt gewaschen. Der Wechsel auf ein anderes Sortierkriterium bedeutet umstellung der Waschmaschine auf ein anderes waschverfahren. Bei jedem Umstellungsvorgang entstehen Durchsatzverluste, da Leertakte geschaltet werden müssen.

4) Um die Anzahl der je Schicht entstehenden Umstellungsvorgänge klein zu halten, wird der von den Identifikationsplätzen auf den sortierstand zulaufende Teilestrom in jeweils gleichgroße ca. 2000 Kleidungsstücke umfassende "Sortier-Chargen" unterteilt.

5) Mit der mittleren Leistung von rund 18.000 Kleidungsstücken/-Schicht werden die hinter den Waschmaschinen chargenweise anfallenden Kleidungsstücke von mehreren parallel arbeitenden Bedienpersonen einzeln aufgenommen und auf Transport-Kleiderbügel aufgezogen. Der Transportbügel befindet sich in einer Arretierung, aus der er nach Freigabe durch die Bedienperson automatisch von einer Bügelförderanlage übernommen wird.

6) Die im Kleidungsstück befestigte Identifikationsnummer, z.B. verschlüsselt als Strichcode (Bar-Code), wird per Scanner gelesen und zusammen mit der Ortskenn-Nr. der Arretierung im Steuerungsrechner der Bügelsortieranlage registriert.

7) Die Bügelsortieranlage besteht aus den drei hintereinander geschalteten Funktionsabschnitten "Speicher-Areal", "dreistufige sortier-Kaskade" und "Ausgabe-Puffer", die untereinander, ausgehend von den Stationen, wo die Kleidungsstücke auf die Transportkleiderbügel aufgezogen werden, durch eine Bügeltransportanlage verbunden sind. Das Speicher-Areal ist in drei parallel geschaltete Speicherbereiche aufgeteilt für die Aufnahme von insgesamt drei Sortier-Chargen, die jeweils ca. 2000 beladene Transportkleiderbügel umfassen. Jeder Speicherbereich wird aus zehn parallel geschalteten Staulinien gebildet, die jede maximal 230 Bügel aufnehmen kann.

Die dreistufige Sortierkaskade besteht aus drei hintereinander geschalteten Stau-Bereichen. Jeder Stau-Bereich wird aus einer unterschiedlichen Anzahl von 5 bis 15 parallel geschalteten Staulinien gebildet, die jede maximal 80 Bügel aufnehmen kann. Jede Staulinie ist in zwei hintereinanderliegende gleich große Stau-Abschnitte unterteilt.

Der Ausgabepuffer besteht aus einer Anzahl von 5 bis 7 parallel geschalteten Staulinien, die jede maximal 80 Bügel aufnehmen kann.

8) Entsprechend dem geforderten Durchsatz von ca. 18.000 Kleidungsstücken je 10/Stunden-Schicht sollte die Förderleistung der Bügeltransportanlage aus Gründen der Minimierung von Verschleiß und Fehlfunktionen auf den kleinstmöglichen Wert von 1800 Bügeln je Stunde ausgelegt werden.

Stand der Technik ist, daß bisher für derartige Aufgabenstellungen ausgeführte Sortieranlagen mit Fördergeschwindigkeiten betrieben werden, die bei voller Nutzung eine Förderleistung von z.B. mehr als 2100 Bügel je Stunde bereitstellen und trotz üppiger Dimensionierung der Stall-Bereiche der Sortierkaskadenstufen mit z.B. insgesamt 26 Staulinien (15+5+6) nur eine stark schwankende Durchsatzleistung von z.B. im Mittel nur 1200 Bügel je Stunde, sortiert nach vorgegebener Reihenfolge, erreichen.

Dieser niedrige Sortiersystemwirkungsgrad von unter 60 % (installierte Förderleistung im Verhältnis zu realisierter Durchsatzleistung) ist darin begründet, daß die Sortierung als nacheinander ablaufende Verteilprozesse vorgenommen wird. Es werden jeweils die im Speicher-Areal auf einer Staulinie gesammelten maximal 230 Bügel im ersten Schritt nach Kundenzugehörigkeit auf die z.B. 15 Staulinien der ersten Sortierkaskade verteilt, dann im zweiten Schritt die dort jeweils auf einer Staulinie gesammelten maximal 40 Bügel nach Trägerzugehörigkeit auf die z.B. 5 Staulinien der zweiten Sortierkaskade verteilt, und dann im dritten Schritt dort jeweils auf einer Staulinie gesammelten maximal 40 Bügel nach der vorgegebenen Stapelreihenfolge auf die z.B. 6 Staulinien der dritten sortierkaskade verteilt. Abhängig von der Mengenstruktur einer Sortiercharge - Anzahl Kunden, Anzahl Träger je Kunde, Anzahl Kleidungsstücke je Träger - sind die Stau-Linien in der Reihenfolge der hintereinander geschalteten Funktionsbereiche mit im Durchschnitt abnehmenden und von Staulinie zu Staulinie stark schwankenden Bügelanzahlen belegt. Die jeweils größere der simultan in eine Sortierkaskadenstufe hinein- bzw. herauszufördernde Anzahl Bügel bestimmt den Zeitbedarf für diesen Schritt des Verteilprozesses. Aufgrund der Verkettung der Verteilprozeßschritte bestimmt die in der dreistufigen Sortierkaskade momentan größte aufzuteilende Gruppe von Bügeln den Gesamtdurchsatz.

Bei dieser Art Sortierung können auf einer Staulinie im Speicherareal nur Bügel mit Kleidungsstücken von soviel verschiedenen Runden gesammelt werden, wie der Anzahl der in der ersten Sortierkaskadenstufe vorhandenen Staulinien entspricht, z.B. 15. Weiterhin können auf einer Staulinie der ersten Sortierkaskadenstufe nur Bügel mit Kleidungsstücken von soviel verschiedenen Trägern gesammelt werden, wie der Anzahl der in der zweiten Sortierkaskadenstufe vorhandenen Staulinien entspricht, z.B. 5. Außerdem darf die Anzahl der Kleidungsstücke je Träger nicht größer sein, als die in der letzten Sortierkaskadenstufe vorhandenen z.B. 6 Staulinien.

Es werden somit die zu einem Kunden gehörenden Bügel in der vorgegebenen Reihenfolge der Träger und Kleidungsstücke alle hintereinander in die vorgesehene Staulinie des insgesamt z.B. 5 Staulinien umfassenden Ausgabepuffers mit der installierten Förderleistung von z.B. 2100 Bügeln je Stunde transportiert. Bei Kunden mit größeren Bügelanzahlen ist die Aufnahmekapazität der Staulinien schnell erschöpft, so daß zu einem Kunden gehörende Bügel auf andere Stau-Linien umgeleitet werden müssen, wenn nicht der gesamte sortierablauf zeitweise angehalten werden soll. Die im sortierablauf planmäßig erzeugte Bügelreihenfolge würde dann jedoch, abhängig von diesen zufällig auftretenden Anlagenzuständen, in unvorhersehbarem Umfange zerstört.

Der Erfindung liegt die Aufgabe zugrunde, die bei den bekannten sortieranlagen und verfahren vorhandenen Nachteile zu beseitigen und insbesondere einen gleichmäßigen Mengendurchsatz der Einzelstücke bei insgesamt kleiner ausgelegten Stau-Bereichen in den drei Sortierkaskaden bei automatischer Sortierung der Einzelstücke nach vorgegebener Reihenfolge, unabhängig von der Anzahl und Mengenstruktur der zu berücksichtigenden Sortiermerkmale zu gewährleisten und dafür Verfahren und eine Anlage bereitzustellen.

Erfindungsgemäß ist das Verfahren zum Sortieren von Einzelstücken mit einer Sortiereinrichtung, gebildet aus Sammelzonen, die aus mehreren Staulinien bestehen und mit einer Stetigfördereinrichtung verbunden sind, einer Steuerungseinrichtung,

Umlenkeinrichtungen vor den Staulinien und

eine oder mehrere Ausschleusstationen innerhalb einer Ausschleuseinrichtung nach den Sammelzonen, wobei die zu sortierenden Einzelstücke mit Identnummern versehen sind, die verschlüsselt mehrere Identifikationsmerkmale des Einzelstückes enthalten und wobei die Identnummer von der Steuerungseinrichtung gelesen und für die Steuerung der Einzelstücke durch die Sortiereinrichtung ausgewertet wird,

dadurch gekennzeichnet, daß es die folgenden Merkmale hat:

(a) nach dem Erfassen der Identnummer und vor dem Eintritt in die erste Sammelzone wird jedem Einzelstück über die Steuerungseinrichtung eine Platzhalternummer zugeordnet entsprechend der gewünschten Position im Strom der Einzelstücke, die aus einer vierten Sammelzone gemäß Merkmal (e) an die zahlenmäßig vorher festgelegte Anzahl Ausschleusstationen gefördert werden;

(b) eine der/den Chargengröße(n) der zu sortierenden Einzelstücke angepaßte erste Sammelzone nimmt alle mit einer Platzhalternummer versehene Einzelstücke einer oder mehrerer Chargen in willkürlicher aber in der Steuerungseinrichtung registrierter Reihenfolge auf, und die in der ersten Sammelzone eintreffenden Einzelstücke werden auf m Staulinien verteilt gemäß einem ersten Bestandteil der Platzhalternummer, wobei jede Staulinie eine Aufnahmekapazität von q Einzelstücken hat und m und q ganze Zahlen sind;

(c) von den Staulinien der ersten Sammelzone werden die Einzelstücke durch die verbindende Stetigfördereinrichtung zu einer zweiten, dritten und vierten Sammelzone mit einer Anzahl von n Staulinien in jeder Sammelzone befördert unter weiter differenzierender Verteilung gemäß einem zweiten, dritten und vierten Bestandteil der Platzhalternummer, wobei die Staulinien eine jeweilige Aufnahmekapazität r haben, und r und n ganze Zahlen sind;

(d) über die Steuerungseinrichtung werden jeder einzelnen Staulinie in der ersten Sammelzone $q=n^3$ Einzelteile und jeder einzelnen Staulinie in der zweiten, dritten oder vierten Sammelzone $r=n^2$ Einzelstücke zugeführt;

(e) aus der vierten Sammelzone werden die auf den Staulinien durch den mehrstufigen Verteilablauf in geordneter Reihenfolge vorliegenden Einzelstücke einer Ausschleusungseinrichtung zugeführt, bei denen eine Ausschleusstation immer nur solche zu sortierende Einzelstücke aufnimmt, die dem vorgegebenen fünften Bestandteil der Platzhalternummer entspricht, und die Ausschleusung in der Reihenfolge gewünschter Identifikationsmerkmale erfolgt;

(f) die Sammelzonen und Staulinien sind so bemessen, daß die Sortieranlagenkonfiguration der Beziehung

$$M = \frac{m \cdot q \cdot r}{n^2}$$

entspricht, mit

M = Größe der Sortieranlage
m = Anzahl der Staulinien in der ersten Sammelzone
q = Fassungsvermögen einer Staulinie in der ersten Sammelzone
n = Anzahl der Staulinien in jeder weiteren Sammelzone
r = Fassungsvermögen der Staulinien in den weiteren Sammelzonen.

Besonders wichtig ist, daß sich die Chargengröße erfindungsgemäß aus dem Produkt von m, n, q und r, geteilt durch $n^3$ ergibt, d.h. es gilt die oben genannte Beziehung.

Erfindungsgemäß werden gleiche erste, zweite, dritte, vierte Bestandteile der Platzhalternummer in der gleichen Stau-Linie oder als gleich zugeordneten Stau-Linien der ersten, zweiten, dritten, vierten Sammelzone gestaut.

Die Ausschleusung aus der vierten Sammelzone erfolgt einzeln, gruppenweise, alle je Stau-Linie, parallel oder seriell, entsprechend dem fünften Bestandteil der Platzhalternummer.

Um das erfindungsgemäße Verfahren durchführen zu können, sind folgende Festlegungen erforderlich

(1) die Festlegung einer Teilmenge als Sortiercharge mit einem konstanten Wert
(2) die Festlegung der Transportleistung der Stetigfördereinrichtung
(3) die Aufnahmekapazität der ersten Sammelzone als Vielfaches der Teilmenge Sortiercharge (1)
(4) die Anzahl der Staulinien der ersten Sammelzone
(5) die Anzahl der Staulinien der folgenden drei Sammelzonen
(6) die Anzahl der Ausschleusstellen, der gewünschte Zeitabstand der über die Ausschleusstellen abfließenden Einzelstücke bzw. Gruppen von Einzelstücken.

Die erfindungsgemäße zuzuordnende Platzhalternummer ergibt die Reihenfolge der zu sortierenden Einzelstücke wieder und entspricht daher auch der gewünschten eingenommenen Stellung des Einzelstückes am Ende des Sortierablaufes.

Mit den erfindungsgemäßen Verfahren ist unabhängig von der Anzahl und der Mengenstruktur der Sortiermerkmale die Sortierleistung (Stück/Minute) konstant und entspricht der installierten Transportkapazität der gewählten fördertechnischen Einrichtungen, d.h. es ist ein Anlagennutzungsgrad von 100 % realisiert. Außerdem werden die installierten Aufnahmekapazitäten der insgesamt nur vier benötigten Sammelzonen - eindeutig und zutreffend abzuleiten aus der Größe (Anzahl Stück) der gewählten konstant großen zu sortierenden Teilmengen - im sortierablauf wiederkehrend vollständig belegt, laufen aber niemals über, d.h. es ist ein Anlagennutzungsgrad von 100 % realisiert. Als zusätzlicher Vorteil wird die Verweilzeit der Teilmenge im sortierablauf mit der Dimensionierung der Aufnahmekapazität der ersten im Sortierablauf angeordneten Sammelzone festgelegt und realisiert, d.h. der sortierablauf wird frei von restriktiven Forderungen mit konstanter Systemleistung (Durchsatz, Verweilzeit) bei minimierten technischen Aufwand realisiert.

Dadurch ist mit der Erfindung gewährleistet, daß zu jedem Zeitpunkt des Sortierablaufes bei kontinuierlichem Zufluß von Einzelstücken der abfließende, geordnete Stückestrom (Stück/Minute) unabhängig von der Vermischung

4

auf der zufließenden Seite bzw. den Forderungen an die Reihenfolge auf der abfließenden Seite, genauso groß ist wie der zufließende, ungeordnete Stückestrom (Stück/Minute).

Es wird zwischen dem Zeitpunkt des Eintretens des ersten bzw. des letzten Stückes einer ungeordneten Teilmenge in den Sortierablauf und dem Zeitpunkt des Austretens des ersten bzw. letzten Stückes derselben nun geordneten Teilmenge aus dem Sortierablauf immer derselbe zeitabstand eingehalten.

Die Erfindung betrifft auch eine Sortieranlage zum sortieren von Einzelstücken über Sammelzonen und Staulinien, die mit einer Stetigfördereinrichtung verbunden sind, gekennzeichnet durch die folgenden Merkmale

(a) ein Lesegerät als Bestandteil einer Steuerungseinrichtung zum Lesen einer bestimmte Identifikationsmerkmale verschlüsselnden Identnummer an einem zu sortierenden Einzelstück;

(b) eine Zuordnungseinrichtung als Bestandteil einer Steuerungseinrichtung für die Zuordnung der Identnummer zu einer Platzhalternummer, die die gewünschte Position im Strom der Einzelstücke in den folgenden Sammelzonen, Staulinien und Ausschleusstellen enthält;

(c) eine der/den Chargengröße(n) der zu sortierenden Einzelstücke angepaßte erste Sammelzone zur Aufnahme aller mit einer Platzhalternummer versehenen Einzelstücke einer oder mehrerer Chargen in willkürlicher aber von der Steuerungseinrichtung registrierter Reihenfolge;

(d) erste Umlenkeinrichtungen auf m Staulinien in der ersten Sammelzone für die Einzelstücke gemäß einem ersten Bestandteil der Platzhalternummer, das ein Vorsortierungsmerkmal ist, wobei jede Staulinie eine Aufnahmekapazität q für den zu sortierenden Gegenstand hat und m und q ganze Zahlen sind;

(e) erste Fördereinrichtungen für die Einzelstücke von den Staulinien der ersten Sammelzone zu einer zweiten, dritten und vierten Sammelzone mit einer Anzahl von n Staulinien in jeder Sammelzone gemäß einem zweiten, dritten und vierten Bestandteil der Platzhalternummer, das jeweils ein weiter differenzierendes Vorsortiermerkmal ist, wobei die Staulinien eine jeweilige Aufnahmekapazität r haben, und n und r ganze Zahlen sind;

(f) zweite, dritte und vierte Umlenkeinrichtungen für die Umlenkung der Einzelstücke auf die entsprechenden Staulinien in der zweiten, dritten und vierten Sammelzone;

(g) Steuerungselemente als Bestandteil einer Steuerungseinrichtung mit einer Abgrenzung der eingelesenen Einzelstücke dergestalt, daß die zahlenmäßig konstant große Charge die entsprechende Anzahl Einzelstücke enthält, die in einer vorgegebenen Reihenfolge aus der Sortieranlage abfließen und Blockierung nach Aufnahme von $q=n^3$ Einzelteilen in jeder einzelnen Staulinie in der ersten Sammelzone und nach Aufnahme von $r=n^2$ Einzelstücke in jeder einzelnen Staulinie in der zweiten, dritten oder vierten Sammelzone;

(h) nach der vierten Sammelzone eine Ausschleusungseinrichtung mit mehreren zahlenmäßig festgelegten Ausschleusstellen für die vorsortierten Einzelstücke mit einer zweiten Zuordnungseinrichtung als Bestandteil der Steuerungseinrichtung für die Zuordnung der Platzhalternummer zu der bestimmten Ausschleusstelle, die dem vorgegebenen fünften Bestandteil der Platzhalternummer entspricht.

Dabei entspricht erfindungsgemäß die Chargengröße dem Produkt m, n, q, r, geteilt durch $n^3$.

Für die erfindungsgemäße Sortieranlage müssen die als funktionelle Elemente enthaltenen Fördereinrichtungen, Steuerungseinrichtungen, Steuerungselemente, Umlenkeinrichtungen, Ausschleuseinrichtungen dem jeweiligen Fördergut angepaßt werden, was jedoch für den Fachmann auf dem Gebiet der Fördertechnik ein fachgemäßes Vorgehen darstellt.

Die Erfindung soll nachstehend durch Beispiele näher erläutert werden. Dies erfolgt im wesentlichen durch die Darstellung des Sortierablaufes in einer Mietberufskleidungs-Wäscherei, ist jedoch nicht darauf beschränkt.

In der dazugehörigen Zeichnung bedeuten

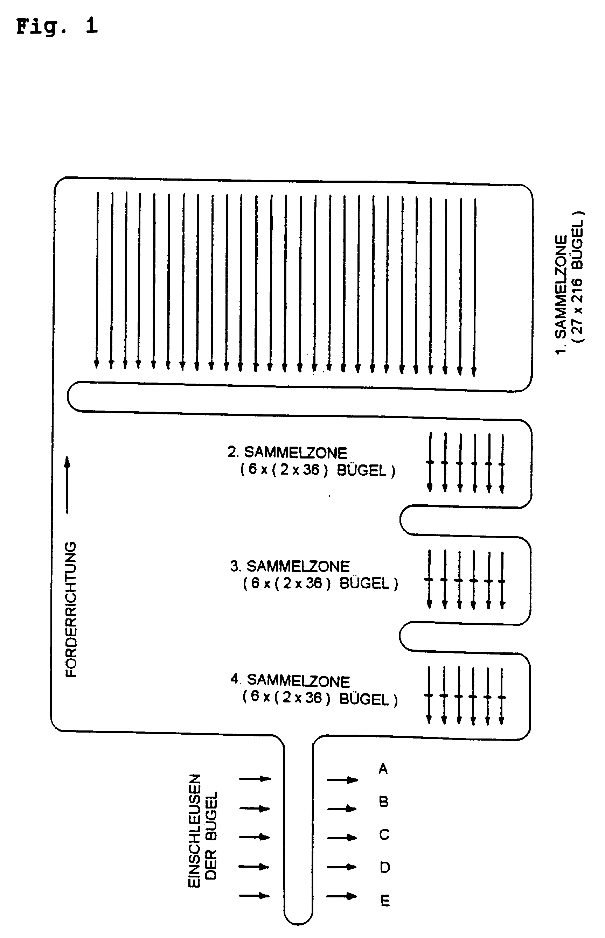

Fig. 1 Sortieranlage nach der Ausführungsform in einer Mietberufskleidungs-Wäscherei;

Fig. 2 Als Ziffern (Platzhalternummern) dargestellte transportierte Einzelstücke in der 4. Sammelzone nach Fig. 1 mit n=6 Staulinien und $r=n^2=36$ Stauplätzen je Staulinie;

Fig. 3 Als Ziffern (Platzhalternummern) dargestellte transportierte Einzelstücke in der 3. Sammelzone nach Fig. 1 mit 6 Staulinien und 36 Stauplätzen je Staulinie;

Fig. 4 Als Ziffern (Platzhalternummern) dargestellte transportierte Einzelstücke in der 2. Sammelzone nach Fig. 1 mit 6 Staulinien und 36 Stauplätzen je Staulinie;

Fig. 5 Als Ziffern (Platzhalternummern) dargestellte transportierte Einzelstücke in der 1. Sammelzone nach Fig. 1 mit 9 Staulinien (m) und 216 Stauplätzen je Staulinie ($q=n^3=6^3=216$);

Fig. 6 Zuordnung der Platzhalternummer zur Identnummer K(Kunde), T (Träger), S (Stück) bei vorgesehenem Abfluß der Einzelstücke in der Reihenfolge K(1,2,...) T(1,2,...) S(1,2,....) über die Ausschleustellen A bzw. B, C, D;

Fig. 7 Sortieranlage in einem Kommissionierlager nach einer weiteren Ausführungsform der Erfindung;

Fig. 8 Sortieranlage für Postsendungen nach einer weiteren Ausführungsform der Erfindung

Beispiel 1

In einer Mietberufskleidungs-Wäscherei werden die angelieferten verschmutzten Kleidungsstücke nach ihrer Registrierung in üblicher Weise nach Gewebe, Farbe, Verschmutzungsgrad usw. sortiert, getrennt und als Wasch-Charge gewaschen und anschließend auf Transportkleiderbügel aufgezogen. Danach erfolgt die Übernahme des Bügels, eingehängt auf einen speziellen Bügelträger, in eine Stetigfördereinrichtung. Die im Kleidungsstück befestigte Identifikationsnummer (Identnr.) verschlüsselt als Bar-Code, wird über einen Scanner gelesen und von einem zentralen Steuerungsrechner registriert.

Für den folgenden Ablauf gelten die folgenden Festlegungen:

1. Aus den Teilmengen, die den Stückestrom bilden, wird eine sortier-Charge gebildet, die beispielsweise auf konstant M = 1944 Bügel festgelegt wird.

2. Die Transportleistung des Bügelförderers wird auf 1800 Bügel/Stunde festgelegt, damit ist auch die Sortierleistung auf 1800 Bügel/Stunde festgelegt;

3. Die Aufnahmekapazität der ersten Sammelzone = "Tourenspeicher" wird auf 3 Sortierchargen, also

$$3 \times M = 3 \times 1944 \text{ Bügel} = 5.832 \text{ Bügel}$$

festgelegt;

damit ist auch die mittlere Verweilzeit einer sortiercharge im Tourenspeicher festgelegt, sie errechnet sich zu

$$\frac{1944 \text{ Bügel}}{1800 \text{ Bügel/Std.}} \times (\tfrac{1}{2} + 1 + \tfrac{1}{2}) = 2,16 \text{ Stunden}$$

4. Der Tourenspeicher wird in

$$3 \times m = 3 \times 9 = 27 \text{ Staulinien}$$

für die Aufnahme von je q = 216 Bügel unterteilt; also 5832 Bügel : 27 = 216 Bügel

5. Die folgenden 3 Sammelzonen = "Kundensortierung", "Trägervorsortierung", "Trägerendsortierung" werden mit jeweils n = 6 Staulinien zur Aufnahme von je

$$2 \times r = 2 \times n^2 = 2 \times 36 \text{ Bügel}$$

festgelegt; also insgesamt

$$2 \times (36 \text{ Bügel} \times 6) = 2 \times (216 \text{ Bügel})$$

6. Es wird festgelegt, an die 5 Ausschleusstellen in konstantem Rhythmus jeweils Serien von konstant 6 Bügeln hintereinander zu transportieren; damit errechnet sich der konstante mittlere Zeitabstand zwischen zwei Serien an einer Ausschleusstelle zu

$$\frac{1800 \text{ Bügel/Std.}}{5 \text{ Stationen} \times 6 \text{ Bügel/Serie}} = 60 \text{ Serien/Stunde und Station}$$

Also: mittlerer Zeitabstand zwischen 2 Serien = 1 Minute.

7. Es wird festgelegt, daß die Bügel mit demselben übergeordneten Sortiermerkmal = "Kundennummer" alle nur an ein und dieselbe Ausschleusstation transportiert werden;

8. Es wird festgelegt, daß die Bügel einer 6er-Serie parallel mit einem Stück je Staulinie aus der insgesamt 6 Staulinien umfassenden vierten Sammelzone = Trägerendsortierung heraustransportiert werden.

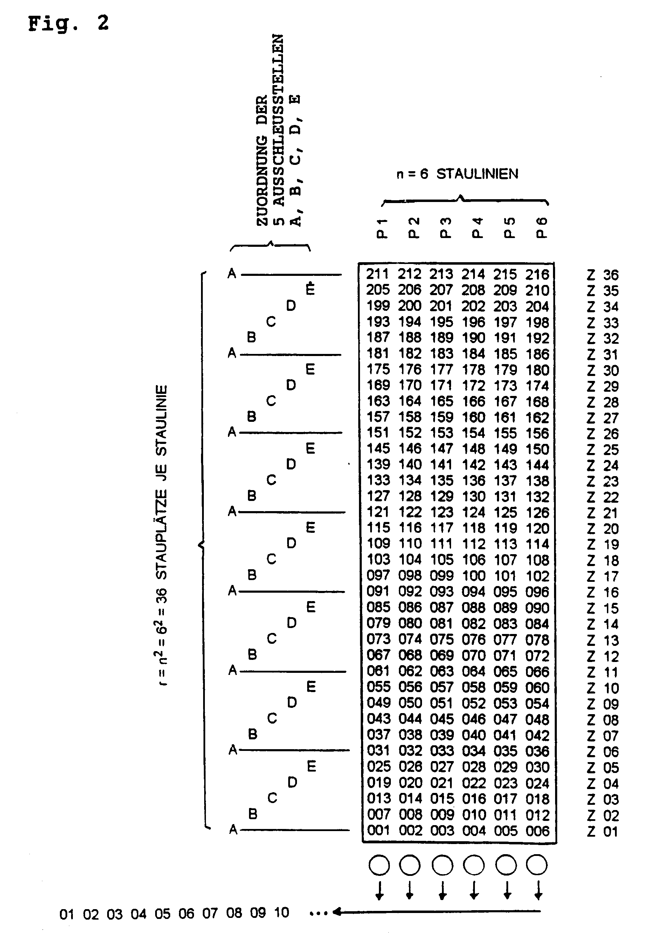

Daraus ergibt sich insgesamt der in Fig. 2 dargestellte Ablauf der Platzhalternummer in der vierten und letzten Sammelzone, aus der die Einzelstücke in aufsteigender Reihenfolge der Platzhalternummern abfließen.

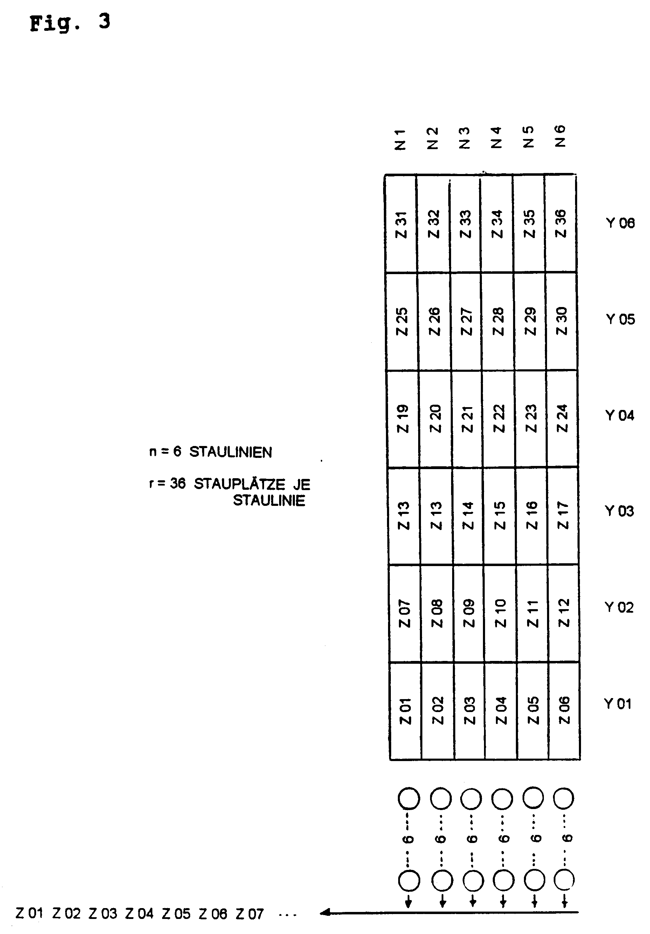

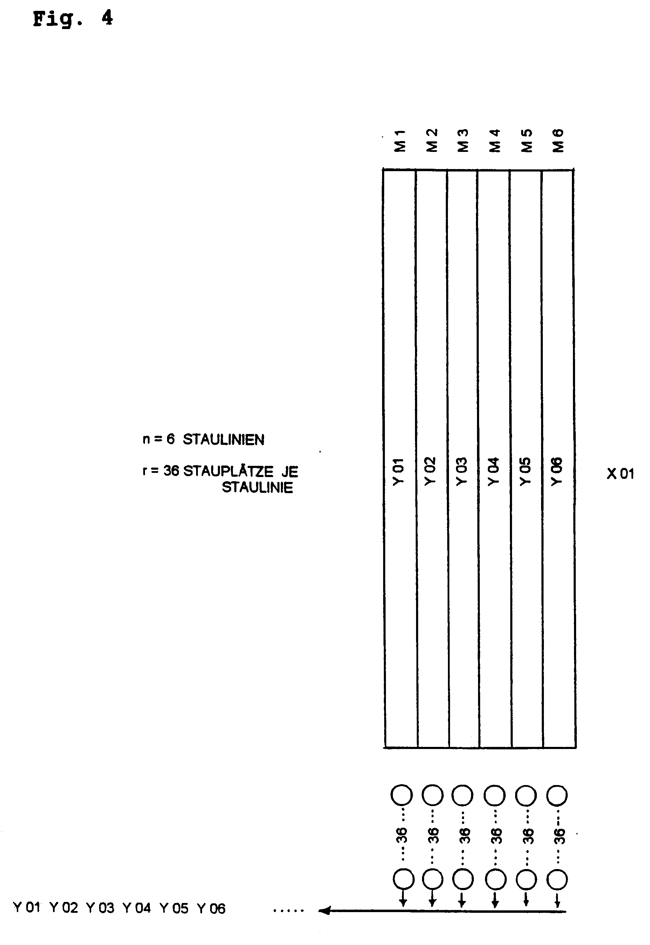

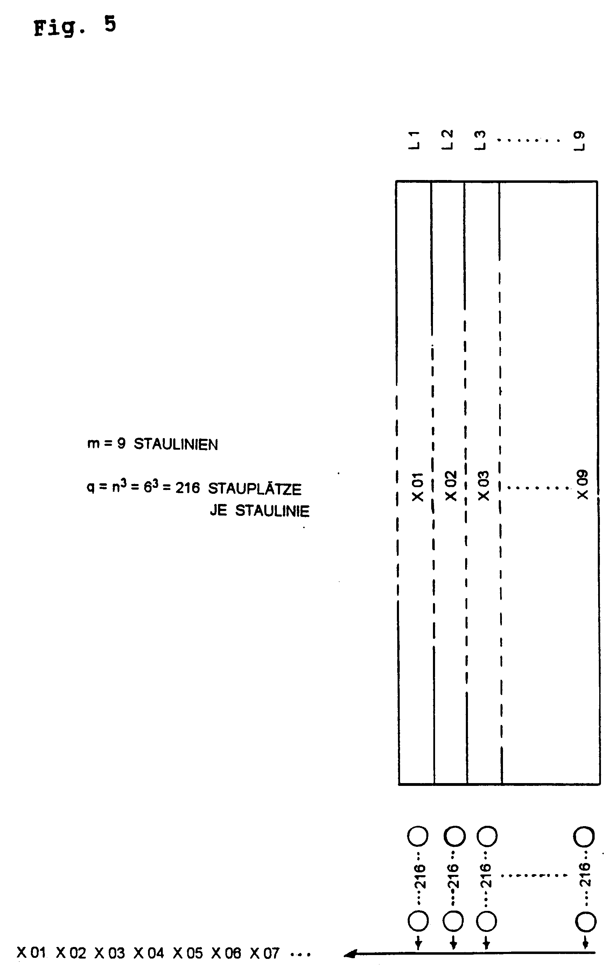

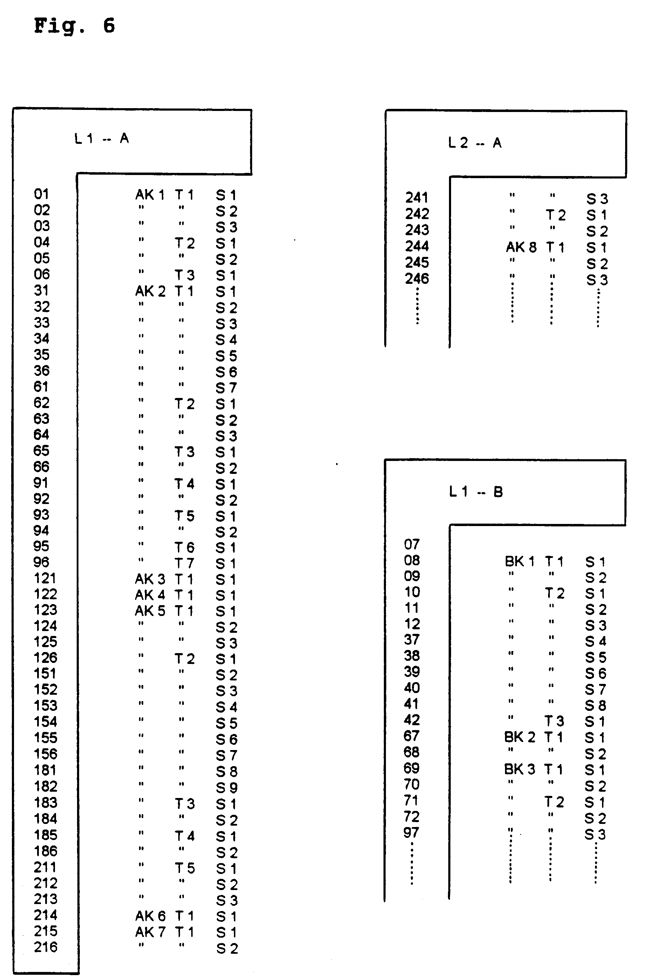

Wenn beispielsweise ein Kleidungsstück mit der Identnummer AK 5, T 4, S 2 gemäß den zuvor genannten Festlegungen als 186. Stück einer Serie von 216 Stücken eine Ausschleusstation verlassen soll, so wird ihm die Platzhalternummer 186 zugeordnet (Fig. 6). Das bedeutet, daß gemäß Aufteilung von fünf Ausschleusstellen und 36 Stauplätzen je Staulinie (Fig. 2) das Kleidungsstück in der Staulinie P 6 die Nummer Z 31 trägt (als Teil der Platzhalternummer). Alle Einzelstücke mit Z 31 kommen aus der Staulinie N 1 der vorherigen (3.) Sammelzone und tragen zusätzlich die Nummer Y 06 (als weiteren Teil der Platzhalternummer) (Fig. 3). Alle Einzelstücke mit Y 06 kommen aus der Staulinie M 6 der vorherigen (2.) Sammelzone und tragen zusätzlich die Nummer X 01 (als weiteren Teil der Platzhalternummer) (Fig. 4). Alle Einzelstücke mit X 01 kommen aus der Staulinie L 1 der vorherigen (1.) Sammelzone (Fig. 5).

Daraus ergibt sich, daß ein Stück mit der Platzhalternummer 186 mit der zusätzlichen Codierung X 01, Y 06, Z 31 als Teil der Platzhalternummer die entsprechenden dafür vorgesehenen Staulinien L 1, M 6, N 1, P 6 der ersten bis vierten Sammelzone passieren muß, um in der gewünschten Folge als 186. Kleidungsstück die Ausschleusstation zu verlassen.

Bei diesem Ablauf ist in jeder Sammelzone ständig nicht mehr als die Zahl der Bügel enthalten, die nach der Erfindung möglich ist, die einzelnen Staulinien sind gleichmäßig ausgelastet, und die Bügel fleißen an den Ausschleusstationen gleichmäßig und in der gewünschten Sortierfolge ab.

Auf diese Weise kann für jedes Kleidungsstück die gewünschte Endposition entsprechend dem sortierablauf in vier Sammelzonen und im Rahmen der begrenzten Staulinien in diesen Sammelzonen festgelegt werden.

Die Staulinien werden z.B. durch geneigte Stangen gebildet, auf denen die aus den Trägervorrichtungen eines Kreisförderers ausgeklinkten Bügel abwärts rutschen bis sie an einer Sperre angehalten werden, so saß nachfolgende Bügel auf der Stange gestaut werden. Die Sperre kann so gestaltet werden, daß beim Passieren einer Tragevorrichtung an dem Kreisförderer, der auch an dieser Seite der stangenförmigen Rutsche vorbeigeführt wird, gerade ein ein Bpügel in die Tragevorrichtung eingeklinkt wird. Der Aus- bzw. Einklinkvorgang wird durch die Steuerungseinrichtung ausgelöst.

Wird die Steuerungseinrichtung als Rechner ausgebildet und werden dort die eingelesenen Identnummern registriert, kann dieser Rechner auch die Vergabe der Platzhalternummern vornehmen.

Beispiel 2

Die Erfindung wird weiterhin an einem automatischen Kommissionier-Lager erläutert, z.B. für die Apothekenversorgung mit pharmazeutischen Produkten in Kleinpackungen oder die Versorgung von Betrieben mit Schrauben in Kleinpackungen oder die Versorgung von Händlern mit Zigarettenstangen.

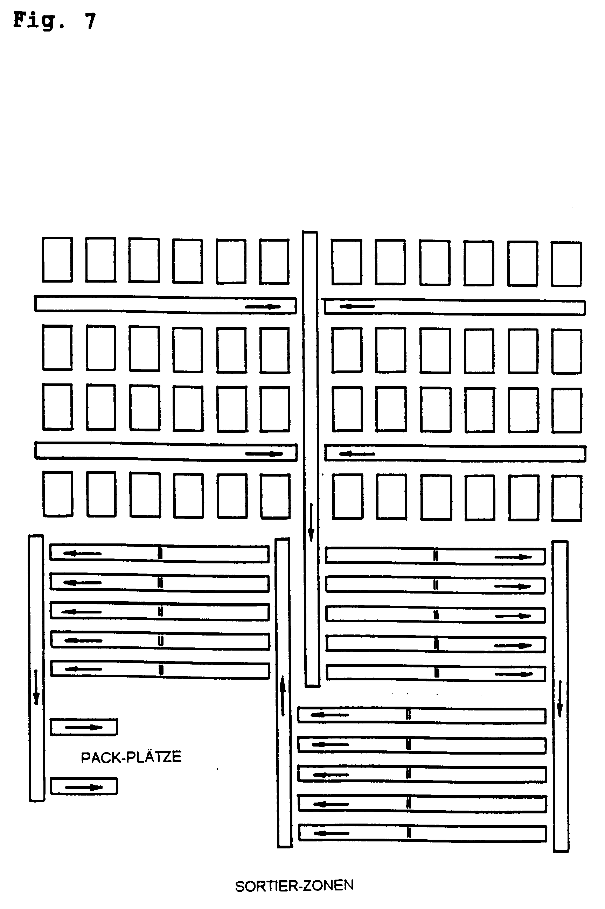

Gemäß Fig. 7 erfolgt aus dem Kommissionier-Lager die automatische Obergabe der benötigten Anzahl Packungen für jeden der für eine Auslieferungstour benötigten Artikel an einen Stetigförderer in der Art, daß die aus den Magazinen z.B. insgesamt ausgestoßenen 125 Packungen lückenlos aneinandergereiht abfließen. Die Stetigförderer sind für den Transport von Kartons, Schachteln, Dosen usw. beispielsweise als Gurtförderer ausgebildet. Die Staulinien sind z.B. als Rollenbahnen mit einzeln angetriebenen, einzeln ein- und ausschaltbaren Rollen ausgebildet, so daß aus der Staulinie nach Anforderung der Steuerungseinrichtung gerade eine Packung an die Überleitstelle zum weiterführenden Gurtförderer transportiert und dort übergeben wird.

Durch Parallelanordnung der Rollenbahnen werden die benötigten Sortierzonen gebildet, die untereinander sowie mit dem Lagerbereich und den Packplätzen mit Gurtförderern verbunden sind. Die Sortierzonen haben in diesem Beispiel gemäß Fig. 7 jeweils 5 Stau-Bahnen mit jeweils 2 x 25 Stauplätzen.

Beispiel 3

In einem Zustellpostamt sind eingehende Briefsendungen für jeden Zustellbereich nach Straßen, Hausnummern und Einzeladressaten entsprechend der Reihenfolge der Zustellungstour zu sortieren.

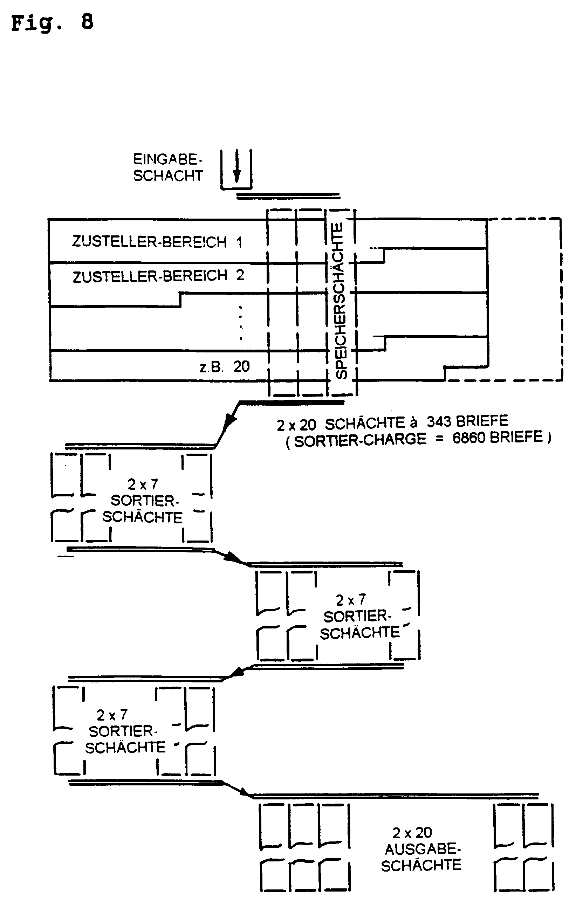

Bei einer Sortiercharge gemäß Fig 8 von z.B. 6.860 Briefen nimmt ein Sortierschacht 343 Briefe in der ersten Sammelzone auf, d.h. es sind 20 Schächte erforderlich. Für die zweite, dritte und vierte Sammelzone ergeben sich als Staulinien jeweils 2 x 7 Sortierschächte mit einer Aufnahmekapazität von jeweils 49 Briefen. Es sollen 2 x 18 Ausgabeschächte vorhanden sein.

Nach den obigen Kriterien werden die Platzhalternummern wie im Beispiel 1 vergeben, und die Sortierung wird in Sammelzonen über die entsprechenden Sortierschächte vorgenommen.

Als Ergebnis liegt eine Sortierfolge in der oben gewünschten Weise vor und damit eine wesentliche Vereinfachung gegenüber dem bisherigen aufwendigen manuellen Verfahren.

**Patentansprüche**

1. Verfahren zum Sortieren von Einzelstücken mit einer Sortiereinrichtung, gebildet aus Sammelzonen, die aus mehreren Staulinien bestehen und mit einer Stetigfördereinrichtung verbunden sind, einer Steuerungseinrichtung, Umlenkeinrichtungen vor den Staulinien und weiterhin bestehnd aus einer oder mehreren Ausschleusstationen innerhalb einer Ausschleuseinrichtung nach den Sammelzonen, wobei die zu sortierenden Einzelstücke mit Identnummern versehen sind, die verschlüsselt mehrere Identifikationsmerkmale des Einzelstückes enthalten und wobei die Identnummer von der Steuerungseinrichtung gelesen und für die Steuerung der Einzelstücke durch die Sortiereinrichtung ausgewertet wird, gekennzeichnet durch die folgenden Merkmale:

(a) nach dem Erfassen der Identnummer und vor dem Eintritt in die erste Sammelzone wird jedem Einzelstück über die Steuerungseinrichtung eine Platzhalternummer zugeordnet entsprechend der gewünschten Position im Strom der Einzelstücke, die aus einer vierten Sammelzone gemäß Merkmal (e) an die zahlenmäßig vorher festgelegte Anzahl Ausschleusstationen gefördert werden;

(b) eine der/den Chargengröße(n) der zu sortierenden Einzelstücke angepaßte erste Sammelzone nimmt alle mit einer Platzhalternummer versehene Einzelstücke einer oder mehrerer Chargen in willkürlicher aber in der Steuerungseinrichtung registrierter Reihenfolge auf, und die in der ersten Sammelzone eintreffenden Einzelstücke werden auf m Staulinien verteilt gemäß einem ersten Bestandteil der Platzhalternummer, wobei jede Staulinie eine Aufnahmekapazität von q Einzelstücken hat und m und q ganze Zahlen sind;

(c) von den Staulinien der ersten Sammelzone werden die Einzelstücke durch die verbindende Stetigfördereinrichtung zu einer zweiten, dritten und vierten Sammelzone mit einer Anzahl von n Staulinien in jeder Sammelzone befördert unter weiter differenzierender Verteilung gemäß einem zweiten, dritten und vierten Bestandteil der Platzhalternummer, wobei die Staulinien eine jeweilige Aufnahmekapazität r haben, und r und n ganze Zahlen sind;

(d) über die Steuerungseinrichtung werden jeder einzelnen Staulinie in der ersten Sammelzone $q=n^3$ Einzelteile und jeder einzelnen Staulinie in der zweiten, dritten oder vierten Sammelzone $r=n^2$ Einzelstücke zugeführt;

(e) aus der vierten Sammelzone werden die auf den Staulinien durch den mehrstufigen Verteilablauf in geordneter Reihenfolge vorliegenden Einzelstücke einer Ausschleusungseinrichtung zugeführt, bei denen eine Ausschleusstation immer nur solche zu sortierende Einzelstücke aufnimmt, die dem vorgegebenen fünften Bestandteil der Platzhalternummer entspricht, und die Ausschleusung in der Reihenfolge gewünschter Identifikationsmerkmale erfolgt;

(f) die Sammelzonen und Staulinien sind so bemessen, daß die Sortieranlagenkonfiguration der Beziehung

$$M = \frac{m \cdot q \cdot r}{n^2}$$

entspricht, mit

M = Größe der Sortieranlage
m = Anzahl der Staulinien in der ersten Sammelzone
q = Fassungsvermögen einer Staulinie in der ersten Sammelzone
n = Anzahl der Staulinien in jeder weiteren Sammelzone
r = Fassungsvermögen der Staulinien in den weiteren Sammelzonen.

2. Verfahren nach Anspruch 1, dadurch gekennzeichnet, daß gleiche erste, zweite, dritte, vierte Bestandteile der Platzhalternummer in der gleichen Staulinie oder als gleich zugeordneten Staulinien der ersten, zweiten, dritten, vierten Sammelzone gestaut werden.

3. Verfahren nach Anspruch 1, dadurch gekennzeichnet, daß die Ausschleusung einzeln, gruppenweise, alle je Staulinie der vierten Sammelzone erfolgt.

4. Verfahren nach Anspruch 3, dadurch gekennzeichnet, daß die Ausschleusung parallel oder seriell erfolgt.

5. Verfahren nach einem der Ansprüche 1 bis 4, dadurch gekennzeichnet, daß die Sortiergeschwindigkeit gleich der Geschwindigkeit der verbindenden Fördereinrichtung ist.

6. Verfahren nach einem der Ansprüche 1 bis 5, dadurch gekennzeichnet, daß die Einzelstücke ausgewählt sind aus der Gruppe, bestehend aus Stückgut, Bekleidung, Postsendungen, Verbrauchsgüter-Kleinabpackungen, Paletten, Arzneimittelabpackungen.

7. Sortieranlage zum Sortieren von Einzelstücken über Sammelzonen und Staulinien, die mit einer Stetigfördereinrichtung verbunden sind, mit einem Lesegerät als Bestandteil einer Steuerungseinrichtung zum Lesen einer bestimmte Identifikationsmerkmale verschlüsselnden Identnummer an einem zu sortierenden Einzelstück; Umlenkeinrichtungen vor den Staulinien und einer oder mehreren Ausschleussstellen innerhalb einer Ausschleuseinrichtung nach den Sammelzonen, gekennzeichnet durch die folgenden Merkmale

(a) eine Zuordnungseinrichtung als Bestandteil einer Steuerungseinrichtung für die Zuordnung der Identnummer zu einer Platzhalternummer, die die gewünschte Position im Strom der Einzelstücke in den folgenden Sammelzonen, Staulinien und Ausschleusstellen enthält;

(b) eine der/den Chargengröße(n) der zu sortierenden Einzelstücke angepaßte erste Sammelzone zur Aufnahme aller mit einer Platzhalternummer versehenen Einzelstücke einer oder mehrerer Chargen, wobei die erste Sammelzone m Staulinien für die Einzelstücke gemäß einem ersten Bestandteil der Platzhalternummer, das ein Vorsortierungsmerkmal ist, enthält, wobei jede Staulinie eine Aufnahmekapazität q für den zu sortierenden Gegenstand hat und m und q ganze Zahlen sind;

(c) eine zweite, dritte und vierte Sammelzone mit einer Anzahl von n Staulinien in jeder Sammelzone gemäß einem zweiten, dritten und vierten Bestandteil der Platzhalternummer, das jeweils ein weiter differenzierendes Vorsortiermerkmal ist, wobei die Staulinien eine jeweilige Aufnahmekapazität r haben, und n und r ganze Zahlen sind;

(d) Steuerungselemente als Bestandteil einer Steuerungseinrichtung mit einer Abgrenzung der eingelesenen Einzelstücke dergestalt, daß die zahlenmäßig konstant große Charge die entsprechende Anzahl Einzelstücke enthält, die in einer vorgegebenen Reihenfolge aus der Sortieranlage abfließen, und einer Blockierung nach Aufnahme von $q=n^3$ Einzelteilen in jeder einzelnen Staulinie in der ersten Sammelzone und nach Aufnahme von $r=n^2$ Einzelstücke in jeder einzelnen Staulinie in der zweiten, dritten oder vierten Sammelzone;

(e) nach der vierten Sammelzone eine Ausschleusungseinrichtung für die vorsortierten Einzelstücke mit einer zweiten Zuordnungseinrichtung als Bestandteil der Steuerungseinrichtung für die Zuordnung der Platzhalternummer zu der bestimmten Ausschleusstelle, die dem vorgegebenen fünften Bestandteil der Platzhalternummer entspricht; wobei

(f) die Anzahl m der Staulinien in der ersten Sammelzone, das Fassungsvermögen q einer Staulinie in der ersten Sammelzone, die Anzahl n der Staulinien in jeder weiteren Sammelzone, das Fassungsvermögen r der Staulinien in den weiteren Sammelzonen zu der Sortieranlagenkonfiguration M in der folgenden Beziehung stehen

$$M = \frac{m \cdot q \cdot r}{n^2}$$

## Claims

1. Method of sorting individual articles with a sorting system formed by collecting zones which consist of several waiting lines and are connected to a continuous conveyor, by a control system, deflecting systems before the waiting lines and also consisting of one or more delivery stations within a delivery system after the collecting zones, wherein the individual articles to be sorted are provided with identification numbers containing several identification features of the individual article in coded form and wherein the identification number is read by the control system and evaluated for control of the individual articles by the sorting system, characterized by the following features:

(a) after detection of the identification number and before entry into the first collecting zone, each individual article is allocated a position number via the control system according to the desired position in the stream of individual articles conveyed from a fourth collecting zone according to feature (e) to the numerically predetermined number of delivery stations;

(b) a first collecting zone adapted to the load size(s) of the individual articles to be sorted holds all individual articles, provided with a position number, from one or more loads in a sequence which is arbitrary but is recorded in the control system, and the individual articles entering the first collection zone are distributed over m waiting lines according to a first component of the position number, each waiting line having a holding capacity of q individual articles and m and q being integers;

(c) the individual articles are conveyed from the waiting lines of the first collecting zone through the connecting continuous conveyor to a second, third and fourth collecting zone with a number n of waiting lines in each collecting zone with further differentiating distribution according to a second, third and fourth component of the position number, the waiting lines having a respective holding capacity r, and r and n being integers;

(d) via the control system, $q=n^3$ individual parts are supplied to each individual waiting line in the first collecting zone and $r=n^2$ individual articles to each individual waiting line in the second, third or fourth collecting zone;

(e) the individual articles present in the waiting lines in an ordered sequence owing to the multi-stage distribution procedure are supplied from the fourth collecting zone to a delivery system in which a delivery station invariably only holds individual articles which are to be sorted and correspond to the predetermined fifth component of the position number, and delivery takes place in the sequence of desired identification features;

(f) the collecting zones and waiting lines are designed so that the sorting installation configuration corresponds to the equation

$$M = \frac{m \cdot q \cdot r}{n^2}$$

wherein

M = size of the sorting installation
m = number of waiting lines in the first collecting zone
q = capacity of a waiting line in the first collecting zone
n = number of waiting lines in each further collecting zone
r = capacity of the waiting lines in the further collecting zones.

2. Method according to Claim 1, characterized in that identical first, second, third, fourth components of the position numbers are retained in the same waiting line or as identically allocated waiting lines of the first, second, third, fourth collecting zone.

3. Method according to Claim 1, characterized in that delivery takes place individually, group-wise, all per waiting line of the fourth collecting zone.

4. Method according to Claim 3, characterized in that delivery takes place in parallel or serially.

5. Method according to one of Claims 1 to 4, characterized in that the sorting speed is identical to the speed of the connecting conveyor.

6. Method according to one of Claims 1 to 5, characterized in that the individual articles are selected from the group consisting of piece goods, clothing, mail, small-package commodities, pallets, medicament packages.

7. Sorting installation for sorting individual articles over collecting zones and waiting lines connected to a continuous conveyor, with a reader as a component of a control system for reading an identification number which is the code for specific identification features, on an individual article to be sorted; deflecting systems before the waiting lines and one or more delivery points within a delivery system after the collecting zones, characterized by the following features

(a) an allocation system as a component of a control system for allocating the identification number to a position number containing the desired position in the stream of the individual articles in the following collecting zones, waiting lines and delivery points;

(b) a first collecting zone adapted to the load size(s) of the individual articles to be sorted for holding all individual articles provided with a position number in one or more loads, the first collecting zone m containing waiting lines for the individual articles according to a first component of the position number which is a presorting feature, each waiting line having a holding capacity q for the item to be sorted and m and q being integers;

(c) a second, third and fourth collecting zone with a number n of waiting lines in each collecting zone according to a second, third and fourth component of the position number which is a further respective differentiating presorting feature, the waiting lines having a respective holding capacity r, and n and r being integers;

(d) control elements as components of a control system with a limit to the input individual articles such that the numerically constantly large load contains the corresponding number of individual articles which issue from the sorting installation in a predetermined sequence, and a blockage after the holding of $q=n^3$ individual parts in each individual waiting line in the first collecting zone and after holding $r=n^2$ individual articles in each individual waiting line in the second, third or fourth collecting zone;

(e) after the fourth collecting zone, a delivery system for the presorted individual articles with a second allocation system as a component of the control system for allocating the position number to the specific delivery point corresponding to the predetermined fifth component of the position number; wherein

(f) the number m of waiting lines in the first collecting zone, the capacity q of a waiting line in the first collecting zone, the number n of waiting lines in each further collecting zone, the capacity r of the waiting lines in the further collecting zones are related to the sorting installation configuration M by the following equation

$$M = \frac{m \cdot q \cdot r}{n^2}$$

**Revendications**

1.  Procédé de triage de pièces individuelles avec un équipement de triage, constitué de zones de regroupement, comprenant plusieurs lignes d'accumulation et raccordées à un dispositif de manutention continue, avec un dispositif de contrôle, et des dispositifs de déviation devant les lignes d'accumulation, et constitué d'un ou plusieurs postes de sortie se trouvant a l'intérieur d'un dispositif de sortie en aval des zones de regroupement, procédé selon lequel les pièces individuelles sont munies de numéros d'identification lesquels contiennent, sous un code, plusieurs caractéristiques d'identification de la pièce individuelle, et selon lequel le numéro d'identification est lu par le dispositif de contrôle et est exploité pour le contrôle des pièces individuelles par le dispositif de triage, caractérisé en ce qu'il présente les particularités distinctives suivantes :

    (a) après la détection des numéros d'identification et avant l'entrée dans la première zone de regroupement, chaque pièce individuelle se voit affecter, par le dispositif de contrôle, un numéro de réservation de place en fonction de sa position souhaitée dans le flot de pièces individuel les qui sont transportées depuis une quatrième zone de regroupement, selon la caractéristique (e), vers les postes de sortie dont le nombre a été fixé statistiquement auparavant;
    (b) une première zone de regroupement, adaptée à la (aux) grosseur(s) du/des lot(s) de pièces individuelles à trier accueille toutes les pièces individuelles d'un ou de plusieurs lots munies d'un numéro de réservation de place, dans un ordre arbitraire mais enregistré par le dispositif de contrôle, et les pièces individuelles aboutissant dans la première zone de regroupement sont réparties sur m lignes d'accumulation, en accord avec un premier élément du numéro de réservation de place, chaque ligne d'accumulation ayant une capacité d'accueil de q pièces individuelles et m et q étant des nombres entiers;
    (c) partant des lignes d'accumulation de la première zone de regroupement, les pièces individuelles sont acheminées par le dispositif de manutention continue assurant la liaison, vers une deuxième, une troisième et une quatrième zone de regroupement avec un nombre de n lignes d'accumulation dans chaque zone de regroupement, en poursuivant leur répartition différenciée suivant un deuxième, un troisième et un quatrième élément du numéro de réservation de place, les lignes d'accumulation bénéficiant d'une capacité d'accueil respective de r, et r et n étant des nombres entiers;
    (d) par l'intermédiaire du dispositif de contrôle, on achemine à chaque ligne d'accumulation de la première zone de regroupement $q=n^3$ pièces individuelles, et à chaque ligne d'accumulation des deuxième, troisième et quatrième zones de regroupement, $r=n^2$ pièces individuelles;
    (e) partant de la quatrième zone de regroupement, les pièces individuelles ordonnancées sur les lignes d'accumulation par le processus de répartition à plusieurs niveaux sont acheminées sur un dispositif de sortie, un poste de sortie n'acceptant toujours que celles des pièces individuelles à trier, qui correspondent au cinquième élément prédéfini du numéro de réservation de place, et la sortie se faisant dans l'ordre des caractéristiques d'identifications souhaitées;
    (f) les dimensions des zones de regroupement et les lignes d'accumulation sont conçues de façon à ce que la configuration des installations de triage satisfasse au rapport :

$$M = \frac{m \cdot q \cdot r}{n^2}$$

avec

M = grandeur de l'installation de triage
m = nombre de lignes d'accumulation de la première zone de regroupement
q = capacité d'une ligne d'accumulation de la première zone de regroupement
n = nombre de lignes d'accumulation dans chacune des autres zones de regroupement
r = capacité des lignes d'accumulation des autres zones de regroupement.

2. Procédé selon la revendication 1, caractérisé en ce que des premier, deuxième, troisième et quatrième éléments identiques du numéro de réservation de place sont mis en attente dans la même ligne d'accumulation ou dans des lignes d'accumulation de même affectation des première, deuxième, troisième et quatrième zones de regroupement.

3. Procédé selon la revendication 1, caractérisé en ce que la sortie s'opère individuellement, par groupe, toutes les pièces de chaque ligne d'accumulation de la quatrième zone de regroupement.

4. Procédé selon la revendication 3, caractérisé en ce que la sortie se fait en parallèle ou en série.

5. Procédé selon l'une des revendications 1 à 4, caractérisé en ce que la vitesse de triage est égale à la vitesse du dispositif de manutention de liaison.

6. Procédé selon l'une des revendications 1 à 5, caractérisé en ce que les pièces individuelles sont choisies dans le groupe comprenant les produits en vrac, les vêtements, les envois postaux, les petits emballages de biens de consommation, les palettes, les emballages de médicaments.

7. Installation de triage pour trier des pièces individuelles, grâce à des zones de regroupement et à des lignes d'accumulation qui sont reliées à un dispositif de manutention continue, avec un appareil de lecture, comme élément constitutif d'un dispositif de contrôle, pour lire un numéro d'identification codant des caractéristiques d'identification déterminées, sur une pièce individuelle à trier; des dispositifs de déviation devant les lignes d'accumulation, et un ou plusieurs points de sortie à l'intérieur d'un dispositif de sortie en aval des zones de regroupement, caractérisée par les particularités distinctives suivantes:

(a) un dispositif d'affectation, comme élément constitutif d'un dispositif de contrôle, pour affecter les numéros d'identifications à un numéro de réservation de place contenant la position souhaitée dans le flot des pièces individuelles dans les zones de regroupement, lignes d'accumulation et points de sortie qui vont suivre;

(b) une première zone de regroupement adaptée à la (aux) grandeurs des lots des pièces individuelles à trier, pour accueillir toutes les pièces individuelles munies d'un numéro de réservation de place, de un ou de plusieurs lots, la première zone de regroupement comprenant m lignes d'accumulation pour les pièces individuelles, en conformité avec un premier élément du numéro de réservation de place, qui est une caractéristique de triage préalable, chaque ligne d'accumulation ayant une capacité d'accueil q pour l'objet devant être trié, m et q étant des nombres entiers;

(c) une deuxième, troisième et quatrième zone de regroupement, avec un nombre de n lignes d'accumulation dans chaque zone de regroupement, répondant à un deuxième, troisième et quatrième élément du numéro de réservation de place, lesquels sont, chacun, une autre caractéristique de triage préalable différenciée, les lignes d'accumulation ayant une capacité d'accueil respective r, n et r étant des nombres entiers;

(d) des éléments de contrôle, en tant qu'élément constitutif d'un dispositif de contrôle, avec une délimitation des pièces individuelles lues, de telle sorte que le lot de grandeur statistiquement constante comprenne le nombre correspondant de pièces individuelles sortant dans un ordre préétabli de l'installation de triage, et un blocage après réception de $q = n^3$ pièces individuelles dans chacune des différentes lignes d'accumulation se trouvant dans la première zone de regroupement, et après réception de $r = n^2$ pièces individuelles dans chacune des différentes lignes d'accumulation des deuxième, troisième et quatrième zones de regroupement;

(e) en aval de la quatrième zone de regroupement, un dispositif de sortie comprenant plusieurs points de sortie fixés statistiquement, pour le triage préalable de pièces individuelles, avec un second dispositif d'affectation, comme élément constitutif du dispositif de contrôle, pour affecter le numéro de réservation de place au point de sortie déterminé correspondant au cinquième élément prédéterminé du numéro de réservation de place, étant précisé que :

(f) le nombre m des lignes d'accumulation de la première zone de regroupement, la capacité q d'une ligne d'accumulation de la première zone de regroupement, le nombre n des lignes d'accumulation dans chacune des autres zones de regroupement, la capacité r des lignes d'accumulation des autres zones de regroupement par rapport à la configuration de l'installation de triage M se situent dans le rapport suivant :

$$M = \frac{m \cdot q \cdot r}{n^2}$$

## Fig. 1

1. SAMMELZONE
( 27 x 216 BÜGEL )

2. SAMMELZONE
( 6 x ( 2 x 36 ) BÜGEL )

3. SAMMELZONE
( 6 x ( 2 x 36 ) BÜGEL )

4. SAMMELZONE
( 6 x ( 2 x 36 ) BÜGEL )

FÖRDERRICHTUNG

EINSCHLEUSEN
DER BÜGEL

A
B
C
D
E

Fig. 2

ZUORDNUNG DER
5 AUSSCHLEUSSTELLEN
A, B, C, D, E

n = 6 STAULINIEN

P 1  P 2  P 3  P 4  P 5  P 6

| A | | | | | | 211 | 212 | 213 | 214 | 215 | 216 | Z 36 |
| | | | | Ė | | 205 | 206 | 207 | 208 | 209 | 210 | Z 35 |
| | | | D | | | 199 | 200 | 201 | 202 | 203 | 204 | Z 34 |
| | | C | | | | 193 | 194 | 195 | 196 | 197 | 198 | Z 33 |
| | B | | | | | 187 | 188 | 189 | 190 | 191 | 192 | Z 32 |
| A | | | | | | 181 | 182 | 183 | 184 | 185 | 186 | Z 31 |
| | | | | E | | 175 | 176 | 177 | 178 | 179 | 180 | Z 30 |
| | | | D | | | 169 | 170 | 171 | 172 | 173 | 174 | Z 29 |
| | | C | | | | 163 | 164 | 165 | 166 | 167 | 168 | Z 28 |
| | B | | | | | 157 | 158 | 159 | 160 | 161 | 162 | Z 27 |
| A | | | | | | 151 | 152 | 153 | 154 | 155 | 156 | Z 26 |
| | | | | E | | 145 | 146 | 147 | 148 | 149 | 150 | Z 25 |
| | | | D | | | 139 | 140 | 141 | 142 | 143 | 144 | Z 24 |
| | | C | | | | 133 | 134 | 135 | 136 | 137 | 138 | Z 23 |
| | B | | | | | 127 | 128 | 129 | 130 | 131 | 132 | Z 22 |
| A | | | | | | 121 | 122 | 123 | 124 | 125 | 126 | Z 21 |
| | | | | E | | 115 | 116 | 117 | 118 | 119 | 120 | Z 20 |
| | | | D | | | 109 | 110 | 111 | 112 | 113 | 114 | Z 19 |
| | | C | | | | 103 | 104 | 105 | 106 | 107 | 108 | Z 18 |
| | B | | | | | 097 | 098 | 099 | 100 | 101 | 102 | Z 17 |
| A | | | | | | 091 | 092 | 093 | 094 | 095 | 096 | Z 16 |
| | | | | E | | 085 | 086 | 087 | 088 | 089 | 090 | Z 15 |
| | | | D | | | 079 | 080 | 081 | 082 | 083 | 084 | Z 14 |
| | | C | | | | 073 | 074 | 075 | 076 | 077 | 078 | Z 13 |
| | B | | | | | 067 | 068 | 069 | 070 | 071 | 072 | Z 12 |
| A | | | | | | 061 | 062 | 063 | 064 | 065 | 066 | Z 11 |
| | | | | E | | 055 | 056 | 057 | 058 | 059 | 060 | Z 10 |
| | | | D | | | 049 | 050 | 051 | 052 | 053 | 054 | Z 09 |
| | | C | | | | 043 | 044 | 045 | 046 | 047 | 048 | Z 08 |
| | B | | | | | 037 | 038 | 039 | 040 | 041 | 042 | Z 07 |
| A | | | | | | 031 | 032 | 033 | 034 | 035 | 036 | Z 06 |
| | | | | E | | 025 | 026 | 027 | 028 | 029 | 030 | Z 05 |
| | | | D | | | 019 | 020 | 021 | 022 | 023 | 024 | Z 04 |
| | | C | | | | 013 | 014 | 015 | 016 | 017 | 018 | Z 03 |
| | B | | | | | 007 | 008 | 009 | 010 | 011 | 012 | Z 02 |
| A | | | | | | 001 | 002 | 003 | 004 | 005 | 006 | Z 01 |

$r = n^2 = 6^2 = 36$ STAUPLÄTZE JE STAULINIE

01 02 03 04 05 06 07 08 09 10 ...

# Fig. 3

n = 6  STAULINIEN

r = 36  STAUPLÄTZE JE
STAULINIE

|  | N 1 | N 2 | N 3 | N 4 | N 5 | N 6 |  |
|---|---|---|---|---|---|---|---|
|  | Z 31 | Z 32 | Z 33 | Z 34 | Z 35 | Z 36 | Y 06 |
|  | Z 25 | Z 26 | Z 27 | Z 28 | Z 29 | Z 30 | Y 05 |
|  | Z 19 | Z 20 | Z 21 | Z 22 | Z 23 | Z 24 | Y 04 |
|  | Z 13 | Z 13 | Z 14 | Z 15 | Z 16 | Z 17 | Y 03 |
|  | Z 07 | Z 08 | Z 09 | Z 10 | Z 11 | Z 12 | Y 02 |
|  | Z 01 | Z 02 | Z 03 | Z 04 | Z 05 | Z 06 | Y 01 |

Z 01  Z 02  Z 03  Z 04  Z 05  Z 06  Z 07  · · ·

# Fig. 4

n = 6 STAULINIEN

r = 36 STAUPLÄTZE JE STAULINIE

M 1 M 2 M 3 M 4 M 5 M 6

Y 01 Y 02 Y 03 Y 04 Y 05 Y 06   X 01

····36 ····36 ····36 ····36 ····36 ····36

Y 01  Y 02  Y 03  Y 04  Y 05  Y 06 ·····

# Fig. 5

m = 9 STAULINIEN

$q = n^3 = 6^3 = 216$ STAUPLÄTZE
JE STAULINIE

X 01  X 02  X 03  X 04  X 05  X 06  X 07 ···

## Fig. 6

```
┌─────────────────────────────┐
│          L 1 -- A           │
│   ┌─────────────────────────┘
│   │
│ 01 │        AK 1   T 1    S 1
│ 02 │         "      "     S 2
│ 03 │         "      "     S 3
│ 04 │         "     T 2    S 1
│ 05 │         "      "     S 2
│ 06 │         "     T 3    S 1
│ 31 │        AK 2   T 1    S 1
│ 32 │         "      "     S 2
│ 33 │         "      "     S 3
│ 34 │         "      "     S 4
│ 35 │         "      "     S 5
│ 36 │         "      "     S 6
│ 61 │         "      "     S 7
│ 62 │         "     T 2    S 1
│ 63 │         "      "     S 2
│ 64 │         "      "     S 3
│ 65 │         "     T 3    S 1
│ 66 │         "      "     S 2
│ 91 │         "     T 4    S 1
│ 92 │         "      "     S 2
│ 93 │         "     T 5    S 1
│ 94 │         "      "     S 2
│ 95 │         "     T 6    S 1
│ 96 │         "     T 7    S 1
│ 121│        AK 3   T 1    S 1
│ 122│        AK 4   T 1    S 1
│ 123│        AK 5   T 1    S 1
│ 124│         "      "     S 2
│ 125│         "      "     S 3
│ 126│         "     T 2    S 1
│ 151│         "      "     S 2
│ 152│         "      "     S 3
│ 153│         "      "     S 4
│ 154│         "      "     S 5
│ 155│         "      "     S 6
│ 156│         "      "     S 7
│ 181│         "      "     S 8
│ 182│         "      "     S 9
│ 183│         "     T 3    S 1
│ 184│         "      "     S 2
│ 185│         "     T 4    S 1
│ 186│         "      "     S 2
│ 211│         "     T 5    S 1
│ 212│         "      "     S 2
│ 213│         "      "     S 3
│ 214│        AK 6   T 1    S 1
│ 215│        AK 7   T 1    S 1
│ 216│         "      "     S 2
└─────────────────────────────┘
```

```
┌─────────────────────────────┐
│          L 2 -- A           │
│   ┌─────────────────────────┘
│   │
│ 241│         "      "     S 3
│ 242│         "     T 2    S 1
│ 243│         "      "     S 2
│ 244│        AK 8   T 1    S 1
│ 245│         "      "     S 2
│ 246│         "      "     S 3
│   :      :      :      :
```

```
┌─────────────────────────────┐
│          L 1 -- B           │
│   ┌─────────────────────────┘
│   │
│ 07 │
│ 08 │        BK 1   T 1    S 1
│ 09 │         "      "     S 2
│ 10 │         "     T 2    S 1
│ 11 │         "      "     S 2
│ 12 │         "      "     S 3
│ 37 │         "      "     S 4
│ 38 │         "      "     S 5
│ 39 │         "      "     S 6
│ 40 │         "      "     S 7
│ 41 │         "      "     S 8
│ 42 │         "     T 3    S 1
│ 67 │        BK 2   T 1    S 1
│ 68 │         "      "     S 2
│ 69 │        BK 3   T 1    S 1
│ 70 │         "      "     S 2
│ 71 │         "     T 2    S 1
│ 72 │         "      "     S 2
│ 97 │         "      "     S 3
│   :      :      :      :
```

**Fig. 7**

PACK-PLÄTZE

SORTIER-ZONEN

# Fig. 8

EINGABE-
SCHACHT

ZUSTELLER-BEREICH 1

ZUSTELLER-BEREICH 2

z.B. 20

SPEICHERSCHÄCHTE

2 x 20 SCHÄCHTE à 343 BRIEFE
( SORTIER-CHARGE = 6860 BRIEFE )

2 x 7
SORTIER-
SCHÄCHTE

2 x 7
SORTIER-
SCHÄCHTE

2 x 7
SORTIER-
SCHÄCHTE

2 x 20
AUSGABE-
SCHÄCHTE